# EUROPEAN PATENT APPLICATION

(11) **EP 2 408 116 A1**
(43) Date of publication of application: **18.01.2012**
(21) Application number: 10290388.7
(22) Date of filing: 13.07.2010
(51) Int. Cl.: H04B 1/04, H04B 1/20

(54) **Media playing device**

(71) Applicant: Alcatel Lucent, 75007 Paris (FR)
(72) Inventor: Van Bemmel Jeroen, 75007 Paris (FR); Claes Sven, 75007 Paris (FR); Martinez Lopez, Mr. Jorge M, 75007 Paris (FR)
(74) Representative: Knights, Rupert

(57) **Abstract**

A portable media device, comprising means for receiving audio and/or video data from an external device and for transmitting control signals to said external device for changing the source or content and a frequency modulation (FM) transmitter for transmitting said received audio and/or video data to a further external device.

## Description

### Background

This invention relates to a media device and system. In particular, it relates to a device for distributing Internet audio and/or video streams.

FM (Frequency Modulation) radios have become very convenient and ubiquitous devices over several decades for listening to audio at home, in the car and elsewhere, due to their portability and ease of use. In general, however, such devices have been limited to playing broadcast radio.

Wireless Internet radio are available, which connect to a Wi-Fi home network for example and play audio and possibly video from the Internet. Such devices are relatively expensive, can be difficult to configure and use and cannot usually be used in all places where traditional radio is used, such as in vehicle. For in-car use there exist FM transmitters which connect to, or are built into, mobile devices such as MP3 players or mobile telephone to play music via a car's built in speaker system. However, typical FM transmitters used for these purposes have too small a range to cover a typical home environment.

### Summary of the Invention

According to the present invention in a first aspect there is provided a media device, comprising means for receiving audio and/or video data from an external device, the media device having means for transmitting control signals to said external device for changing the source or content it transmits to the media device, and a frequency modulation (FM) transmitter for transmitting said received audio and/or video data to a further external device.

The external device may be arranged to be connected to a network for receiving content therefrom. The network may be the Internet.

The media device is most preferably portable.

The device may further include user input means for providing feedback on content, the communication means being adapted to provide said feedback to said external device, for subsequent feedback to a content provider.

The communication means may be a Bluetooth ™ means.

The dedicated input means may be buttons.

The feedback mechanism may be a dedicated user input means for 'liking or unliking', or similar particular content.

The invention further provides a system for providing audio and/or video content to a player having a frequency modulation (FM) receiving means on or associated with it, comprising a first device, means for the first device to transmit data to a second device, the second device having FM means for transmitting said data to said player and for generating and transmitting a signal, controlled by user input, to said first device for selection of content which is transmitted to the second device and onwards to the player.

The first device may be connectable via a network to one or more sources of data. The selected content may be data chosen from the network. The network may be the Internet.

The invention further provides a device, or a system, incorporating any one or more of the novel features or combinations of features herein disclosed.

### Brief Description of the Drawings

Embodiments of the invention will now be described, by way of example only, with reference to the accompanying schematic drawings, in which:
Figure 1 shows a front view of a media device;
Figure 2 shows a rear view; and
Figure 3 shows an overall system including an Internet interface.

### Preferred Embodiments

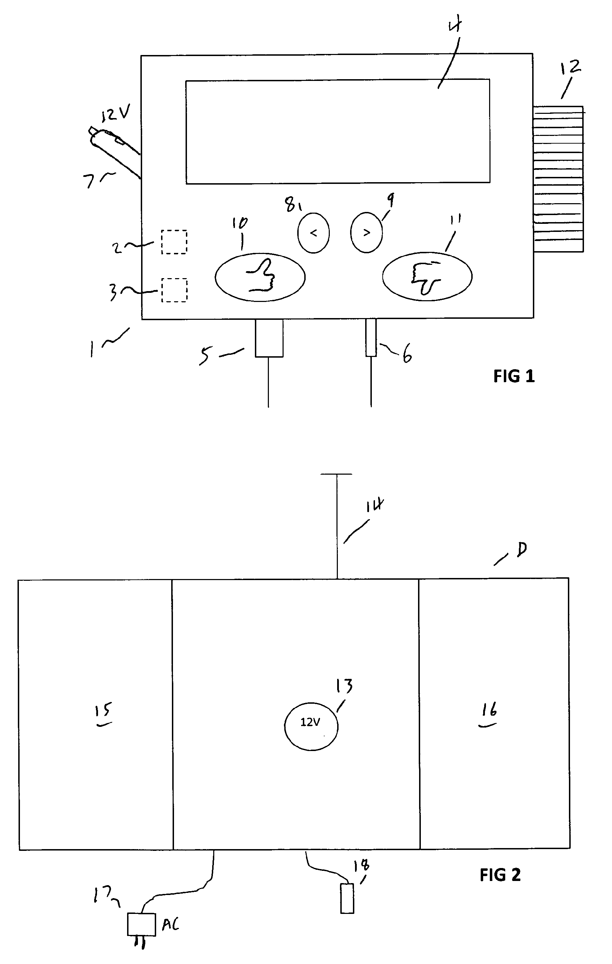

Referring to Figure 1, a portable media device 1 is generally in the form of a personal 'radio' device which can receive audio streams from the Internet (or line input) and transmit via an FM stereo transmitter or via line output. The audio streams may be received from an external device, which receives audio data from the Internet, and/or may be received from an external device upon which audio data is locally stored (such as, but not limited to, an mp3 player).

Referring more specifically to the figure, the device includes a Bluetooth ™unit 2 for receiving audio and/or video data (which is possible under some Bluetooth ™ standards) from an Internet enabled device for example and also which can transmit certain control codes. These may be done via the Bluetooth ™ Audio/Video Remote Control Protocol (AVRCP),
http://en.wikipedia.org/wiki/Bluetooth profile#Audio.2FVideo Remote Control Profile .28AVRCP.2 9), which allows for key presses to be exchanged, such as volume up/down, pause, change channel and so on. This protocol can also support metadata (artist name, track title, etc) which may be used or displayed on the device.
The device also includes an FM transmitter 3 for transmitting on a number of selectable channels. The FM transmitter is, in some embodiments, specifically tuned to indoor usage and to have sufficient range for use in a typical house or similar environment. Note that there are generally laws and standards which limit the transmitting power of an FM transmitter such that if a transmitter is of greater signal strength than these they must be licensed or prohibited entirely.

The Bluetooth ™ and FM transmitters 2 and 3 respectively are shown in dashed lines in Figure 1 since they are internal.

The device also includes a display 4, which may typically be an LCD, an LED or any other type of display. If desired, the display may be omitted entirely, as may the other components.

The device may include a USB, mini-USB or other types of connector 5. This may conveniently be a USB connector or so called mini-USB connector which can be used to power the device from a computer or laptop computer, or direct from mains through a suitable transformer, and/or may be used to provide power to a connected device such as a mobile telephone. A standard audio-in socket 6 is also provided, typically a 3.5 mm type, to receive audio from a connector device. The device also includes a standard 12 volt 'cigarette lighter' jack type of device 7 for connecting to a car's 12 volt power socket or to a corresponding 12 volt socket on a docking device (shown in more detail in Figure 2). This 12 volt plug may have a lineout and/or an antenna pin.

The device further includes dedicated buttons 8, 9 for use in changing an Internet channel, or for select material or content transmitted to the device by Bluetooth ™ signal from an Internet connected external device.

Instead of buttons, these may be touch devices, or any other type of 'user input means'. They are most advantageously dedicated means, providing great ease of use and accessibility and easily enabling unskilled users to use the device.

Note that instead of Bluetooth ™, other types of wireless or wired connection which allow data to be transferred and allow at least a basic level of control information to be sent back (eg USB). Note that the control information may, in some embodiments, be sent over a different channel or communication method to the transmitted data.

The device includes two further, preferably, dedicated user input buttons 10 and 11 for 'liking' or 'unliking' the data content that is received by the device at any time. This causes an appropriate signal to be sent, over the Bluetooth ™ link or otherwise, via the host external Internet device to a website, database or other portal or region where that information can be used to determine user acceptance and comment on that particular data. The data may of course be a song, a video, a speech or otherwise and thus the user approval buttons 10 and 11 can be used to indicate popularity and so on. These are most preferably provided as dedicated buttons 10 and 11 requiring a simple press or other action to simply indicate 'like' or 'dislike' respectively. In variations they, or other means, may be used to provide a greater range of responses, including for example, the desire to purchase a song, which must lead to a link being provided, via the display for example to a rental website. Other uses will be apparent.

The device 1 further includes means for altering the FM frequency used for transmitting the audio or video information received by the device to a second external device such as a portable FM radio, a household radio, a vehicle's FM radio and so on and this may comprise a simple rotary knob 12 which is typically knurled. Alternatively, channel change buttons or any other means may be provided for simply changing the FM frequency/ channel. The version shown has a line in (audio) input 6 in addition to the Bluetooth ™ and this may be used for the desire to connect mobile phones, MP3 players, directly to the device for onward transmission of a simple audio stream.

The upstream device may be provided (via a website for example, or preconfigured) with a set of preset (eg preferred) channels (eg content sources) and the Bluetooth commands form the device 1 used to cause the upstream device to switch between these and therefore alter the content delivered to the device 1.

The device may also be configured to receive meta information such as artist name, song title, etc,. This may be received by the same Bluetooth standard profile.

Note that the actual device shown in Figures 1 and 2 is schematic only and in practice the device may have many different shapes.

Figure 2 shows a docking station. This is an optional device that may be used in a home environment for example, or may have other uses. The docking station includes a 12 volt power socket, as typically used in a car or vehicle, or otherwise known as a 'cigar lighter' or 'cigarette lighter' socket and the plug 7 of the device 1 can plug into this socket 13. The dock has an external FM antenna 40 which, being an external device, may have greater range than an internal FM antenna of the device 1. Note that the device 1 may of course have an internal antenna and/or a socket or other connection for running an external antenna if desired. This antenna can be a simple flexible wire antenna which can be positioned against walls or otherwise for best signal strength.

The docking station may include speakers 15, 16. It may also or alternatively have connection for one or more external speakers and/or an output or outputs to an amplifier or other external devices. It may have inputs for receiving inputs from other devices. Any inputs or outputs may be digital and/or analogue ones. The device preferably powered by a mains power supply 17, or may have internal batteries or rechargeable batteries. Note that device 1 may also be powered by an internal battery or power supply, preferably a rechargeable one or may be mains powered or powers via then 12 V plug or otherwise. The docking station shown also has an additional line out port 18 which may be an electrical or optical (S/PDIF -Sony/Philips Digital Interface)) one for example; for connection to an external device and providing analogue or digital signals thereto.

The device shown is therefore a portable personal radio/audio (or video) device which receives audio streams from an Internet connected external device (or from a line input) and transmits them via an FM stereo mechanism (and/or a line output). The device can be used both in a car, plugged into the standard 12 volt cigar lighter/power socket and at home or another environment plugged into its associated docket station D or in a standalone environment. The device provides buttons (or other dedicated input devices) 8, 9 for changing Internet channels and means for tuning the FM broadcast frequency and buttons or other user input devices 10 and 11 for providing feedback (eg 'like' and 'dislike'). It also has a display screen for displaying status information, song titles, artists, advertisements, news/ information or other data obtained from the data stream received from an external device. The device can connect to computers, laptop computers, mobile devices or other external devices via either wireless communications such as Bluetooth ™ (2.1 class 1) or by wired connection and can be powered either through the 12 volt connector, through USB or through internal batteries. In some embodiments, it might also provide power to an external device such as a mobile device connected via a USB, for example, for charging in a vehicle or at home or otherwise.

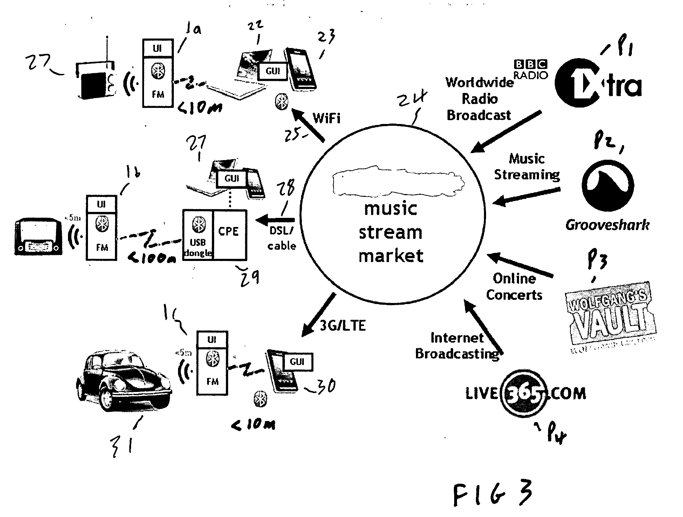

Associated with the device is an online service/marketplace 20, shown schematically in Figure 3. Such online marketplace/online services are known in themselves and one example is the PLAY@HOME system. The device can interface with the service, via the external Internet device, to subscribe to audio or video streams or interest. A web interface is provided for controlling the device remotely and for enabling commands such as channel change and/or selecting volume from a device such as a mobile device.

The device is not of course limited to use with one particular external device. It may be used with a large variety of devices.

Referring to Figure 3, various content providers P1 to P4 (such as BBC radio, groove shark and so on) offer streams to the marketplace. Some of these may be commercial ones so that a user can subscribe or pay on a one off basis for a higher quality stream and add free stream, and so on. Some of these streams may be interactive and thus enable voting, through the interactive buttons 10 and 11 on the device 1 to indicate user preferences for particular content. Streams may be able to play advertisements on the devices screen and many other types of content or material will be apparent. Account provisions, subscription, etc may be done at the laptop, etc to which the device connects.

Three typical (non-limiting) uses of a device as shown schematically in Figure 3. In the first one, device 1a is connected to a laptop computer 21 and/or a mobile device 22 by a Bluetooth ™ connector which typically has a range of up to around 10 meters. The laptop computer 23 receives a stream from the stream market 24 (which is provided on the Internet) via a suitable Internet connector, perhaps through a Wi-Fi network 25 and transmits this to the device 1. The device then transmits by an FM signal 26 to a portable radio 27, or other FM receiver.

By using the Bluetooth ™ AVRCP profile, or otherwise, the device 1 is able to communicate with the computer or other equipment 22 in order to cause this to change channel, ie the choice of streaming server or a choice of content given by a streaming service. The voting buttons 10 and 11 can also be used to transmit information, via the computer 22, back to the music stream market and perhaps back to the providers themselves for feedback.

Media device 1b is connected to a device 27 via a Customer Premises Equipment (CPE) which uses a more powerful Bluetooth ™ transmission mechanism, perhaps via a USB 'dongle' connected to the device an internal device which can have a range typically of up to about 100 meters. In this case device 27 is shown as being connected via digital subscriber line (DSL) or cable network to the music stream market on the Internet. The device 1b then again transmits FM signal to a portable radio or other device. The range of these may be, for example, up to 5 meters or greater or lesser range may be achieved. As stated, it will usually be important that legal limits regarding FM signals strength are not exceeded.

Device 1c is shown as connected to a mobile phone 30 via a Bluetooth ™ link. This may connect via cellular technology such as 3G or long term evolution (LTE) or other protocols to the music stream market 24 on the Internet. In this example, device 1c is shown as being used in a vehicle and transmits FM signals to an FM antenna in the vehicle 31. The antenna is not shown but is connected to an FM radio or other playback device on the vehicle such that the vehicle can playback music received by the device once, through the mobile phone 30 from the Internet.

By using the voting system, users can recommend interesting streams and can interact with each other and with stream providers, various forums, social networking groups and so on may be used to achieve this content providers can determine the amount of interest (or disinterest) in their products. Users might also be able to purchase music they hear. For example, if a user presses the like button upon hearing a particular song, then the arrangement might be that the user is provided with a link, perhaps on the display of a device or on the attached computer, so that the user can then purchase the song, find out more information about the artists, take part in user forum, find details of concert, and so on.

The device 1 is relatively cheap to produce and can operate in a simple plug and play manner. It can use little power and is portable. By using the Bluetooth ™ standard 2.1 class 1 which can produce 100 mill watts of power, then up to 100 meter range can be achieved so that the device can be placed up to 100 meters or so away from a host Internet device and thus can be placed anywhere in the home for example. It is envisaged that future Bluetooth ™ protocol, or other wireless or wired transmission systems or protocols, may increase this distance anymore and the device may be used with any such wired or wireless system instead of, or in addition to, the Bluetooth ™ system.

The FM transmit frequency could also be remotely configurable (i.e. managed) by an operator, for example based on the location (area) of the device (e.g. determined by Digital Subscriber Line (DSL) line id using Dynamic Host Configuration Protocol (DHCP). This would make it even easier for the user to configure the device, as the operator can maintain an overview of the best channel to choose for each region to avoid or minimize the risk of interference with other channels.

The device may also be associated with a remote control device (not shown) which might have buttons or other user input means for channel/content change, like/unlike, and/or other functions, for enabling use of the device remotely.

The description and drawings merely illustrate the principles of the invention. It will thus be appreciated that those skilled in the art will be able to devise various arrangements that, although not explicitly described or shown herein, embody the principles of the invention and are included within its spirit and scope.

Furthermore, all examples recited herein are principally intended expressly to be only for pedagogical purposes to aid the reader in understanding the principles of the invention and the concepts contributed by the inventor(s) to furthering the art, and are used to be construed as being without limitation to such specifically recited examples and conditions. Moreover, all statements herein reciting principles, aspects, and embodiments of the invention, as well as specific examples thereof, are intended to encompass equivalents thereof.

## Claims

1. A media device, comprising means for receiving audio and/or video data from an external device, the media device having means for transmitting control signals to said external device for changing the source or content it transmits to the media device, and a frequency modulation (FM) transmitter for transmitting said received audio and/or video data to a further external device.

2. A device as claimed in Claim 1, including dedicated user input means for enabling selection of content from said external device.

3. A device as claimed in Claim 1 or 2, wherein the means for receiving audio and/or video data is a Bluetooth ™ means.

4. A device as claimed in any preceding claim, adapted to receive data from the Internet, via an external device, and adapted such that the control signals transmitted to the external device are adapted to cause the external device to change Internet channel or content.

5. A device as claimed in any preceding claim, including user input means for providing feedback, to said external device, or via said external device to an Internet based source, for providing feedback on content.

6. A device as claimed in Claim 5, wherein the feedback user input means are a dedicated user input means.

7. A device as claimed in Claim 5 or Claim 6, wherein the feedback means provide a 'like' or 'unlike' function.

8. A system for providing audio and/or video content to a player having a frequency modulation (FM) receiving means on or associated with it, comprising a first device, means for the first device to transmit data to a second device, the second device having FM means for transmitting said data to said player and for generating and transmitting a control signal, controlled by user input, to said first device for selection of content, which is transmitted to the second device and onwards to the player.

9. A system as claimed in Claim 8, wherein the first device is connectable via the Internet to one or more sources of data.

10. A system as claimed in Claim 8 or 9, wherein the first device and second device are connected by a Bluetooth ™ means.

11. A system as claimed in any of Claims 8 to 10, wherein the second device comprises dedicated user input means for selecting content.

12. A device as claimed in any of Claims 8 to 11, wherein the second device comprises means for a user to provide feedback, via the first device, to a content provider or database on the network.

13. A system as claimed in Claim 12, wherein the feedback means are dedicated user input means.

14. A system as claimed in Claim 13, wherein the feedback means are arranged to transmit a signal representative of `like' or 'unlike'.

15. An apparatus or system as claimed in any preceding claim, wherein the apparatus or second device comprise a plug means for connecting the device to a power socket, of the cigar lighter type, provided in a vehicle or in an associated docking station or other external apparatus.
